# EUROPÄISCHE PATENTSCHRIFT

(11) **EP 2 538 186 B1**
(45) Veröffentlichungstag und Bekanntmachung des Hinweises auf die Patenterteilung: **20.01.2016**
(21) Anmeldenummer: 11170587.7
(22) Anmeldetag: 20.06.2011
(51) Int. Cl.: G01J 3/42, G01N 21/35

(54) **Variable Laufzeitänderung von elektromagnetischer Strahlung**
Variable runtime adjustment of electromagnetic radiation
Modification de durée variable du rayonnement électromagnétique

(43) Veröffentlichungstag der Anmeldung: 26.12.2012
(73) Patentinhaber: PHILIPPS-UNIVERSITÄT MARBURG, 35037 Marburg (DE)
(72) Erfinder: Koch, Martin, 35037 Marburg (DE); Scheller, Maik, Tucson, AZ 85713 (US); Chatterjee, Sangam, 35037 Marburg (DE); Busch, Stefan F., 35037 Marburg (DE); Probst, Thorsten, 38102 Braunschweig (DE)
(74) Vertreter: Patentanwälte Olbricht Buchhold Keulertz

(56) Entgegenhaltungen:
- GB-A- 2 393 263
- SU C B: "ACHIEVING VARIATION OF THE OPTICAL PATH LENGTH BY A FEW MILLIMETERSAT MILLISECOND RATES FOR IMAGING OF TURBID MEDIA AND OPTICAL INTERFEROMETRY: A NEY TECHNIQUE", OPTICS LETTERS, OSA, OPTICAL SOCIETY OF AMERICA, WASHINGTON, DC, US, Bd. 22, Nr. 10, 15. Mai 1997 (1997-05-15), Seiten 665-667, XP000656830, ISSN: 0146-9592
- SCHWERDTFEGER M ET AL: "Discrete sampling of continuous wave terahertz radiation", INFRARED MILLIMETER AND TERAHERTZ WAVES (IRMMW-THZ), 2010 35TH INTERNATIONAL CONFERENCE ON, IEEE, PISCATAWAY, NJ, USA, 5. September 2010 (2010-09-05), Seiten 1-2, XP031783240, ISBN: 978-1-4244-6655-9

## Beschreibung

Die Erfindung betrifft eine Vorrichtung und ein Verfahren zur variablen Laufzeitänderung von elektromagnetischer Strahlung wie z.B. Strahlung im Terahertz (THz)- und / oder im optischen Frequenzbereich. Die Erfindung ermöglicht eine kostengünstige, schnelle und definierte Laufzeitänderung der Strahlung und eignet sich somit für den Einsatz in THz-Systemen mit denen beispielsweise Kunststoffbauteile, Faserverbundstoffe oder Lebensmittelprodukte auf Fehlstellen überprüft werden können. Die Erfindung ersetzt bisherige teure und langsame technische Realisierungen.

### Beschreibung

### Stand der Technik

Der THz-Bereich, hier definiert als ein Bereich von unter 50 GHz bis 100 THz, liegt im elektromagnetischen Spektrum zwischen den Mikrowellen und der infraroten Strahlung. Diese exponierte Stellung zwischen Optik und Elektronik eröffnet eine Vielzahl von metrologischen Applikationen, beispielsweise in der Sicherheitstechnik, in der industriellen Prozessüberwachung und in der Medizintechnik.

Übliche THz-Systeme wie im Dokument GB2393263, basieren auf dem Einsatz von Laserstrahlung zur Anregung von photoleitfähigen Antennen. Hierbei wird das Laserlicht über einen Frequenzmischprozess in THz-Strahlung gewandelt. Diese kann detektiert werden, indem ein Teil der Laserstrahlung zur zeitlichen Abtastung der THz-Wellen eingesetzt wird. Dieses wird THz-Zeitbereichsspektroskopie genannt. Ein THz-Spektrometer basiert auf der nichtlinearen Wandlung von optischen Wellen in THz-Wellen sowie der Detektion der THz-Wellen über einen nichtlinearen Mischprozess der Laserstrahlung im Detektor. Um das zeitliche Profil des THz-Messsignals aufzunehmen, muss eine Laufzeitänderung der Laserstrahlung oder der THz-Strahlung erfolgen. Das technische Element welches diese hervorruft wird als Verzögerungsstrecke bezeichnet.

In bisherigen kommerziellen THz-Systemen wird konventionell ein mikrometergenauer Linearstelltisch als Verzögerungsstrecke eingesetzt, auf dem ein Spiegel montiert ist. Die Laserstrahlung wird kollinear zur Bewegungsrichtung dieser Einheit eingefädelt, um bei konstanter Austrittsposition abhängig von der Verschiebung eine variable Laufzeitänderung zu erfahren. Es resultiert eine hohe Genauigkeit der Zeitauflösung, jedoch eine geringe Messgeschwindigkeit wegen der langsamen Verschieberate.

Zusätzlich wird in diesen Spektrometern üblicherweise ein weiteres Instrument eingebaut, welches eine ungenaue, jedoch schnelle Bewegung des Spiegels und damit eine grobe Justierung des THz-Signals ermöglicht.

Ferner existieren alternative Konzepte, welche in der Erprobung sind, bei denen reflektierende Oberflächen rotiert bzw. gekippt werden, um über eine aufwendige Spiegelgeometrie diese Bewegung in eine kontrollierte Laufzeitänderung umzusetzen. Eine weitere Möglichkeit besteht in dem Einsatz einer mehrere Meter langen Glasfaser, die unter hohem Kraftaufwand gedehnt wird. Die Verwendung der linearen Verschiebebewegung, wie oben beschrieben, resultiert in geringen Messgeschwindigkeiten (etwa 30 Sekunden pro Messzyklus) bei hohen Genauigkeiten der Zeitauflösung. Bei Einsatz eines groben Justierverstellers können moderate Messraten (etwa 25 Hz) erreicht werden, jedoch geht dabei die Genauigkeit der Zeitauflösung verloren und das Messfenster ist stark eingeschränkt, da nur ein kleiner Hub erreicht werden kann. Ebenfalls ist nachteilig, dass ein derartiger Verschiebetisch preislich im Bereich mehrerer tausend Euro liegt. Zusätzlich erfordert die Verwendung einer reflektiven Optik eine aufwendige und hochgenaue Positionierung des Laserstrahls.

Letzteres gilt ebenso für die anderen experimentellen Verfahren, bei denen rotierende oder kippbare Reflexionsoptiken eingesetzt werden.

Das Konzept der Faserdehnung wurde bereits experimentell überprüft. Nachteilig ist, dass die notwendige Faserlänge von mehr als 10 m zu einer hohen Anfälligkeit für thermische Drifts führt und somit eine kostenintensive, interferometrische Kontrolleinheit notwendig ist. Die hohen Gesamtkosten dieses Systems verhindern bisher einen Praxiseinsatz.

### Aufgabe

Die Aufgabe ist daher, eine Vorrichtung und ein Verfahren zur kostengünstigen, schnellen und genauen Laufzeitveränderung der elektromagnetischen Strahlung im THz-Frequenzbereich und / oder im optischen Frequenzbereich in THz-Systemen zu entwickeln.

### Lösung der Aufgabe

Dies wird erfindungsgemäß bzgl. der Vorrichtung gemäß Anspruch 1 und bzgl. des Verfahrens zur Laufzeitänderung nach Anspruch 9 gelöst.

Unter einem Würfel 1 ist ein Element zu verstehen, das mindestens zwei sich mindestens teilweise gegenüberliegende planparallele Seiten aufweist, wobei die Seiten als Quadrate, Rechtecke, Rauten, Rhomben oder Vielecken ausgeführt sind. Wobei das Verzögerungselement 1, 2 beispielsweise mit einer Anti-Reflexions-Beschichtung versehen ist.

Wobei das Verzögerungselement 1, 2 beispielsweise aus einem homogenen Material mit konstantem Brechungsindex ausgeführt ist oder als Mischstoff ausgeführt ist. Wobei der Brechungsindex größer als der Brechungsindex der Umgebung ist. Wobei die Anti-Reflexions-Beschichtung für den Einsatz im Strahlengang der elektromagnetischen Strahlung im optischen Frequenzbereich beispielsweise als Nanostrukturierung der Oberfläche ausgeführt ist.

Wobei die Anti-Reflexions-Beschichtung für den Einsatz im Strahlengang der elektromagnetischen Strahlung im THz-Frequenzbereich beispielsweise als Mikrostrukturierungen der Oberfläche ausgeführt ist.

Wobei optional ein reflektierendes Element mit Änderung der Ebene des reflektierten Strahlengangs 4 und / oder ein optisches Element 6 zur Aufhebung des Versatzes des Strahlengangs 7 nach dem Verzögerungselement in Form einer rotierenden transparenten planparallelen Platte 1 oder eines rotierenden transparenten planparallelen Würfels 2 angeordnet ist.

Wobei insbesondere die Ecken und Kanten des Verzögerungselementes in Form einer rotierenden transparenten planparallelen Platte 1 oder eines rotierenden transparenten planparallelen Würfels 2 so geformt sind, dass der Luftwiderstand möglichst gering ist.

Wobei das Verzögerungselement in Form einer rotierenden transparenten planparallelen Platte 1 oder eines rotierenden transparenten planparallelen Würfels 2 alternativ aus zwei Materialien besteht, wobei das eine Material durchlässig ist für elektromagnetische Strahlung im optischen Frequenzbereich und das andere für elektromagnetische Strahlung im THz-Frequenzbereich.

Wobei das Verzögerungselement in Form einer rotierenden transparenten planparallelen Platte 1 oder eines rotierenden transparenten planparallelen Würfels 2 entweder im Strahlengang der elektromagnetischen Strahlung im THz-Frequenzbereich oder im Strahlengang der elektromagnetischen Strahlung im optischen Frequenzbereich platziert ist oder eine Kombination aus mehreren Elementen in einem oder beiden Strahlengängen platziert ist.

Die Erfindung betrifft ein Verfahren gemäß Anspruch 9.

Unter transparent ist insbesondere zu verstehen, transparent für die elektromagnetische Strahlung im entsprechenden Frequenzbereich. Erfindungsgemäß wird dieses Verzögerungselement in Form einer rotierenden transparenten planparallelen Platte 1 oder eines rotierenden transparenten planparallelen Würfels 2 in den Strahlengang der elektromagnetischen Strahlung im THz-Frequenzbereich (hier definiert als ein Bereich von unter 50 GHz bis 100 THz, insbesondere als Bereich von 100 GHz bis 30 THz) eingesetzt, um in einer Transmissionsgeometrie über eine rotatorische Bewegung definierte und kontinuierliche Laufzeitänderungen hervorzurufen. Als Strahlengang wird der Verlauf der elektromagnetischen Strahlung bezeichnet. Das Verzögerungselement in Form einer rotierenden transparenten planparallelen Platte 1 oder eines rotierenden transparenten planparallelen Würfels 2 rotiert und nutzt einen Encoder zur Positionsbestimmung, respektive zur Zeitmessung und ist damit sowohl schnell als auch genau. Über eine geeignete optionale Anti-Reflexions-Beschichtung wird ein homogener Transmissionsverlauf erreicht, welcher sich dadurch auszeichnet, dass über einen großen Winkelbereich ein ähnlich hoher Reflexionsfaktor gegeben ist.

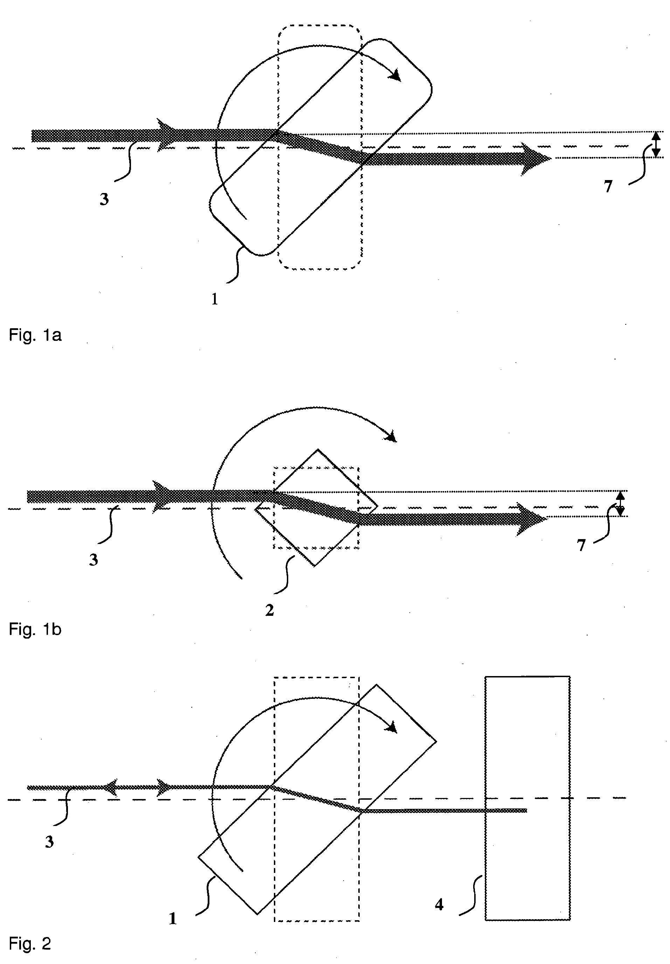

Abhängig von dem Auftreffwinkel der elektromagnetischen Strahlung im THz- und / oder optischen Frequenzbereich 3 auf die Oberfläche des Verzögerungselementes in Form einer rotierenden transparenten planparallelen Platte 1 oder eines rotierenden transparenten planparallelen Würfels 2 wird diese unterschiedlich stark gebrochen und läuft auf unterschiedlichen Pfaden durch das Verzögerungselement in Form einer rotierenden transparenten planparallelen Platte 1 oder eines rotierenden transparenten planparallelen Würfels 2. Hieraus resultieren unterschiedliche Laufzeiten. Hinter dem Verzögerungselement in Form einer rotierenden transparenten planparallelen Platte 1 oder eines rotierenden transparenten planparallelen Würfels 2 wird die elektromagnetische Strahlung 3 einen gewissen Versatz des Strahlengangs 7 erfahren haben (beispielsweise in Fig. 1 a und 1 b zu sehen). Dieser ist jedoch für viele Konfigurationen nur von geringer Bedeutung, da die seitliche Ausdehnung der Welle der elektromagnetischen Strahlung im THz- und / oder optischen Frequenzbereich 3 oftmals größer als der Versatz des Strahlengangs 7 ausfällt und somit keine merkliche Störung der Propagation auftritt. Dieses ist die einfachste und kostengünstigste Realisierung des Konzeptes.

In einem weiteren Ausführungsbeispiel ist ein reflektierendes Element mit Änderung der Ebene des reflektierten Strahlengangs 4 beispielsweise in Form eines Umkehrprismas oder eines Eckspiegels oder eines Planspiegels im Strahlengang hinter dem Verzögerungselement in Form einer rotierenden transparenten planparallelen Platte 1 oder eines rotierenden transparenten planparallelen Würfels 2 platziert, welche die elektromagnetischen Strahlung im THz- und / oder optischen Frequenzbereich 3 in gleicher Richtung zurücklenkt (Fig. 2). Hierdurch wird der Versatz des Strahlengangs 7 vollständig kompensiert und es resultiert eine Verdoppelung der Laufzeitverzögerung, da das Verzögerungselement in Form einer rotierenden transparenten planparallelen Platte 1 oder eines rotierenden transparenten planparallelen Würfels 2 zweimal durchlaufen wird.

In beiden Ausführungsbeispielen kann das Verzögerungselement sowohl im Strahlengang der elektromagnetischen Strahlung im THz-Frequenzbereich als auch im Strahlengang der elektromagnetischen Strahlung im optischen Frequenzbereich platziert werden. Im Falle einer THz-Verzögerung wird beispielsweise ein Verzögerungselement in Form einer rotierenden transparenten planparallelen Platte 1 oder eines rotierenden transparenten planparallelen Würfels 2 aus Kunststoff verwendet, besonders bevorzugt aus Polyethylen (PE). Weitere Materialien für das Verzögerungselement im Strahlengang der elektromagnetischen Strahlung im THz-Frequenzbereich, sind PP, HDPE, TPX und Teflon. Für die optische Verzögerung wird beispielsweise ein Verzögerungselement in Form einer rotierenden transparenten planparallelen Platte 1 oder eines rotierenden transparenten planparallelen Würfels 2 aus anti-reflexionsbeschichtetem Glas verwendet. Hierbei weist die optionale Anti-Reflektions-Beschichtung einen möglichst konstanten Transmissionsverlauf über den genutzten Winkelbereich auf.

Die Rotation des Verzögerungselementes in Form einer rotierenden transparenten planparallelen Platte 1 oder eines rotierenden transparenten planparallelen Würfels 2 erfolgt beispielsweise über einen Motor. Um eine genaue Zeitposition zu ermitteln, wird die aktuelle Winkelposition des Verzögerungselementes in Form einer rotierenden transparenten planparallelen Platte 1 oder eines rotierenden transparenten planparallelen Würfels 2 über einen Encoder ausgelesen. Der Encoder ist beispielsweise in dem antreibenden Motor integriert oder aber am Verzögerungselement in Form einer rotierenden transparenten planparallelen Platte 1 oder eines rotierenden transparenten planparallelen Würfels 2 befestigt. Damit ist der Messbereich in bis zu tausenden von definierten Zeitstellen untergliedert, mindestens aber mit einer genügenden Anzahl von Stützstellen, welche eine Rekonstruktion der absoluten Zeitposition ermöglicht. Die Genauigkeit dieses Ansatzes ist in der gleichen Größenordnung wie bei dem Einsatz eines langsamen und kostenintensiven Linearstelltisches. Der Encoder misst die Umdrehung beispielsweise über eine Lichtschranke oder über einen Magnetsensor. Als Encoder wird insbesondere ein technisches Element bezeichnet, das eine Position, hier insbesondere einen Winkel, in ein analoges oder digitales elektronisches Signal umwandelt.

Die in einem Prototypen erreichte Messrate bei einer optischen Maximalverzögerung von 55 ps lag mit 480 Hz weit über dem, was die möglichen Konkurrenzverfahren erreichen bei weit geringeren Kosten.

THz-Systeme basieren auf dem Einsatz von elektromagnetischer Strahlung im optischen Frequenzbereich als Laserstrahlung zur Anregung von photoleitfähigen Antennen. Hierbei wird das Laserlicht über einen Frequenzmischprozess in elektromagnetische Strahlung im THz-Frequenzbereich gewandelt. Diese werden detektiert, indem ein Teil der elektromagnetischen Strahlung im optischen Frequenzbereich als Laserstrahlung zur zeitlichen Abtastung der THz-Wellen der elektromagnetischen Strahlung im THz-Frequenzbereich eingesetzt wird. Dieses wird THz-Zeitbereichsspektroskopie genannt im Falle gepulster Laserstrahlung, THz-Photomisch-Spektrometer im Falle von Dauerstrich-Laserstrahlung (cw-Strahlung) mit zwei Frequenzkomponenten und THz-Quasi-Zeitbereichsspektroskopie im Falle von Dauerstrich-Laserstrahlung mit mehreren, äquidistanten Frequenzkomponenten. Ein solches THz-Spektrometer basiert auf der nichtlinearen Wandlung von optischen Wellen der elektromagnetischen Strahlung im optischen Frequenzbereich in THz-Wellen der elektromagnetischen Strahlung im THz-Frequenzbereich sowie der Detektion der THz-Wellen der elektromagnetischen Strahlung im THz-Frequenzbereich über einen nichtlinearen Mischprozess der elektromagnetischen Strahlung im optischen Frequenzbereich in Form von Laserstrahlung im THz-Detektor. Um das zeitliche Profil des THz-Messsignals aufzunehmen, muss eine Laufzeitänderung der elektromagnetischen Strahlung im THz- und / oder optischen Frequenzbereich 3 erfolgen. Das technische Element welches diese hervorruft wird als Verzögerungsstrecke bezeichnet und ist erfindungsgemäß ein Verzögerungselement in Form einer rotierenden transparenten planparallelen Platte 1 und / oder in Form eines rotierenden transparenten planparallelen Würfels 2. Anwendungsfelder eines THz-Systems mit der erfindungsgemäßen Vorrichtung eines Verzögerungselement in Form einer rotierenden transparenten planparallelen Platte 1 und / oder in Form eines rotierenden transparenten planparallelen Würfels 2 und / oder des erfindungsgemäßen Verfahrens sind die Qualitätskontrolle, Dickenbestimmung, Wassergehaltsbestimmung und Durchleuchtung von Kunststoffen, Lebensmitteln, Kleidung, Pflanzen und Papier und die Detektion von Sprengstoffen und anderen Gefahrenstoffen, sowie der Einsatz im Bereich der medizinischen Diagnostik. Ein THz-Spektrometer ist ein Ausführungsbeispiel eines THz-Systems. Ein THz-System besteht üblicherweise aus einem THz-Detektor (THz-Empfänger) 10 und einem THz-Emitter (THz-Sender) 9 oder einem Bauteil, welches sowohl als Emitter und Detektor fungiert (Transceiver), und THz-Optiken zur Strahlführung, einer Datenaufnahmevorrichtung, mindestens einer Laserquelle 8, Betriebselektronik, und Ergebnisanzeige- und Datenauswertungsmodulen.

Ein Verzögerungselement in Form einer rotierenden transparenten planparallelen Platte 1 und / oder in Form eines rotierenden transparenten planparallelen Würfels 2 kann in THz-Time-Domain-Spektrometern (THz-Zeitbereichsspektrometer), bei denen beispielsweise gepulste Laser eingesetzt werden, bei ein- und mehrmodigen THz-Dauerstrichspektrometern, bei THz-Interferometern und bei THz-Quasi-Zeitbereichsspektrometern eingesetzt werden. Gerade die letztere Technik erlaubt kostengünstige THz-Systeme und somit ist die Kombination mit der Erfindung der kostengünstigen Verzögerungseinheit besonders wertvoll.

Durch das Verzögerungselement in Form einer rotierenden transparenten planparallelen Platte 1 oder eines rotierenden transparenten planparallelen Würfels 2 wird eine zeitliche Verzögerung durch die resultierende veränderliche effektive Materialstärke, abhängig vom Drehwinkel des Verzögerungselementes, im Strahlengang erreicht.

Über eine geeignete Anti-Reflektions-Beschichtung erhält man einen homogenen Transmissionsverlauf über den Rotationswinkel. Durch die Anti-Reflektions-Beschichtung auf dem Verzögerungselement in Form einer rotierenden transparenten planparallelen Platte 1 oder eines rotierenden transparenten planparallelen Würfels 2 werden die Reflexionsverluste auf der Oberfläche reduziert. Dieses ist für den Einsatz in einem THz-System besonders wichtig, da hier die Signalqualität signifikant von der optischen Leistung abhängt. Anderenfalls müssten die aufgenommenen Signale mit einer nichtlinearen, winkelabhängigen Korrekturkennlinie aufbereitet werden, welche den praktischen Einsatz erschwert. Erfindungsgemäß wird ein Verzögerungselement in Form einer rotierenden transparenten planparallelen Platte 1 oder eines rotierenden transparenten planparallelen Würfels 2 beschrieben, welches durch eine Anti-Reflektions-Beschichtung über einen weiten Winkelbereich einen konstanten Reflexionsfaktor aufweist. Besonders bevorzugt ist eine Variation des Reflektionsfaktors für einen Auftreffwinkel der elektromagnetischen Strahlung relativ zum Verzögerungselement im Bereich von 0°bis 75°, wobei ein Auftreffwinkel von 0° einem senkrechten Einfall auf die Oberfläche entspricht, unter 2%.

Anti-Reflektions-Beschichtungen bestehen aus einer auf das zu entspiegelnde Material aufzubringende Schichtfolge von Materialien, deren Brechungsindex geringer ist, als derjenige des Materials selbst. Die Schichtdicken weisen i.d.R. optische Dicken (Brechungsindex mal Schichtdicke) von einer viertel Wellenlänge auf. Um den Effekt einer möglichst homogenen Transmission über einen großen Winkelbereich zu erreichen, sind Mehrfachschichtfolgen nutzbar, welche mit kommerziell erhältlichen Programmen berechnet werden können. Gerade für den optischen Bereich sind solche Mehrfachschichten üblich, um eine Probe beispielsweise für einen bestimmten Winkel in einem weiten Wellenlängenbereich (z.B. 400 nm bis 1000 nm) zu entspiegeln. Erfindungsgemäß wird eine Mehrfachschichtfolge verwendet, welche eine Wellenlänge (bevorzugte Wellenlängen sind: 405 nm, 455nm, 532nm, 660 nm, 780 nm, 808 nm, 980 nm, 1030 nm, 1060 nm, 1550 nm) über einen weiten Winkelbereich (bevorzugter Bereich: 0° bis 75°) homogen entspiegelt. Hierbei beträgt die Variation der Restreflektivität der Oberfläche besonders bevorzugt weniger als 2 %.

Als Materialien für Anti-Reflektions-Beschichtungen für elektromagnetische Strahlung im optischen Frequenzbereich werden Oxide oder Fluoride genutzt, insbesondere Siliziumdioxid / Titandioxid / Magnesiumfluorid, sowie Fluorpolymere.

Als Materialien für Anti-Reflektions-Beschichtungen für elektromagnetische Strahlung im THz-Frequenzbereich werden bevorzugt Polymerschichten (Teflon, Polypropylen (PP), Polyethylen (PE)) aufgetragen oder es werden Mikrostrukturierungen der Oberfläche der zu entspiegelnden Materialien vorgenommen. Dies erfolgt durch eine spezielle Strukturierung, beispielsweise durch Einbringen kleiner Bohrungen oder Rillen, deren Abmessungen kleiner als die Wellenlänge der elektromagnetischen Strahlung im THz-Frequenzbereich sind. Damit wird der effektive Brechungsindex der strukturierten Schicht reduziert. Dieses wird insbesondere für ein Kunststoffstück als Verzögerungselement in Form einer rotierenden transparenten planparallelen Platte 1 und / oder in Form eines rotierenden transparenten planparallelen Würfels 2 verwendet, da dessen Oberfläche im Fertigungsprozess leicht entsprechend bearbeitet werden kann.

Für die Anwendung im Strahlengang der elektromagnetischen Strahlung im THz-Frequenzbereich werden alternativ anstatt reiner Polymere "Polymere Compounds" verwendet, also Mischstoffe. Beispielsweise Polyethylen in dem Luftkugeln eingebettet sind. Generell sind poröse Kunststoffe geeignet um Verzögerungselemente in Form einer rotierenden transparenten planparallelen Platte 1 oder eines rotierenden transparenten planparallelen Würfels 2 zu entspiegeln, da deren Brechungsindex geringer ist, als der des Vollmaterials.

Für die Anwendung im Strahlengang der elektromagnetischen Strahlung im optischen Frequenzbereich werden durch eine Nanostrukturierung homogene Brechungsindex-Übergänge erreicht. Hierbei wird beispielsweise Silizium nanostrukturiert auf das Verzögerungselement in Form einer rotierenden transparenten planparallelen Platte 1 und / oder auf das Verzögerungselement in Form eines rotierenden transparenten planparallelen Würfels 2 aufgebracht. Alternativ wird die Polarisation der elektromagnetischen Strahlung im THz- und / oder optischen Frequenzbereich 3 ausgenutzt (mit oder ohne Kombination einer geeigneten Anti-Reflektions-Beschichtung), um einen relativ flachen Transmissionsverlauf zu erreichen. Grund hierfür ist, dass die Reflexionsfaktoren für die P-Polarisation (parallele Polarisation) und S-Polarisation (senkrechte Polarisation) winkelabhängig sind, d.h. bei einem Winkel zwischen der Ausbreitungsrichtung der elektromagnetischen Strahlung und der Flächennormalen der Oberfläche von 0° nehmen beide Reflektionsfaktoren den gleichen Wert an. Für zunehmende Winkel steigt der Faktor für S-Polarisation, während er für P-Polarisation abnimmt, bis der sog. Brewsterwinkel erreicht wird. Dies ist ein alternatives Verfahren um bei geeigneter Wahl der Polarisationslage der Wellen auch den gewünschten Effekt eines homogenen Transmissionsverlaufs über einen weiten Winkelbereich zu erreichen, bzw. zu unterstützen.

Bevorzugt ist die Anti-Reflexions-Beschichtung insbesondere auf alle Seiten aufgebracht, auf die die Strahlung trifft bzw. austritt, jedoch auf mindestens eine der Seiten. Im Falle eines Verzögerungselementes in Form einer rotierenden transparenten planparallelen Platte 1 ist die Anti-Reflexions-Beschichtung beispielsweise auf beiden länglichen Seiten, im Falle des Verzögerungselementes in Form eines rotierenden transparenten planparallelen Würfels 2 auf vier Seiten aufgebracht.

Um bei höheren Geschwindigkeiten den Luftwiderstand des Verzögerungselementes in Form einer rotierenden transparenten planparallelen Platte 1 oder eines rotierenden transparenten planparallelen Würfels 2 zu reduzieren werden die Ecken / Seiten der Platte geeignet geformt. Als geeignete Größe kommt für eine Platte ein Seitenverhältnis in Frage, welches zum einen einen möglichst großen Winkelbereich nutzbar macht und zum anderen die Größe des Bauteils minimiert. Unter der weiterhin gegebenen Funktion als Verzögerungselement in Form einer rotierenden transparenten planparallelen Platte 1 oder eines rotierenden transparenten planparallelen Würfels 2 ist die äußere Kontur der Platte bzw. des Würfels derart optimiert, dass der Luftströmungswiderstand möglichst gering ist. Dies erfolgt durch abrunden der Kanten und / oder Ecken. Bei der Platte kann diese Abrundung bis zum Erhalt eines Ovals durchgeführt werden. Dieses erlaubt hohe Drehgeschwindigkeiten ohne störende Luftverwirbelungen und / oder Geräuschentwicklung.

Der nutzbare Winkelbereich hängt von der Geometrie des Verzögerungselementes in Form einer rotierenden transparenten planparallelen Platte 1 oder eines rotierenden transparenten planparallelen Würfels 2 ab. Eine sehr dünne und sehr breite Platte kann in einem großen Winkelbereich genutzt werden, ohne das der Strahl abgeschnitten wird. Bei großen Winkel (beispielsweise 80° bei einem Material mit Brechungsindex 1,5) treten zusätzlich hohe Reflexionsverluste auf, sofern keine Anti-Reflexions-Beschichtung vorliegt. Besonders bevorzugt ist ein nutzbarer Bereich des Auftreffwinkels der elektromagnetischen Strahlung relativ zum Verzögerungselement im Bereich von 0° bis 75°. Dieser ist beispielsweise über eine planparallele Platte aus einem Material mit einem Brechungsindex nahe 1,5, welche eine Abmessung von 25 mm Dicke und 70 mm Breite aufweist, zugänglich ohne die elektromagnetische Strahlung merklich zu beschneiden.

Trotz der geringen Kosten und des relativ einfachen Aufbaus ist dieser Ansatz den alternativen, sehr viel kostenintensiveren und langsameren Verfahren in vieler Hinsicht überlegen oder zu mindestens ebenbürtig.

### Ausführungsbeispiele

Fig. 1 a zeigt ein Verzögerungselement in Form einer rotierenden transparenten planparallelen Platte 1. Die Seiten und Ecken weisen eine geeignete Form auf um den Luftwiderstand zu reduzieren. Bei einem Rechteck treten pro Umdrehung vier Verzögerungsbereiche auf: 0-90°, 90°-180°, 180°-270°, 270°-360°.
Fig. 1b zeigt ein weiteres Ausführungsbeispiel des Verzögerungselementes in Form eines rotierenden transparenten planparallelen Würfels 2. Durch die Nutzung mehrerer Facetten wird eine Verdopplung des Verzögerungszyklus erreicht. Bei einem Würfel wird die Anzahl der Verzögerungsbereiche verdoppelt gegenüber der Platte in Fig. 1a: 0-45°, 45°-90°, usw.

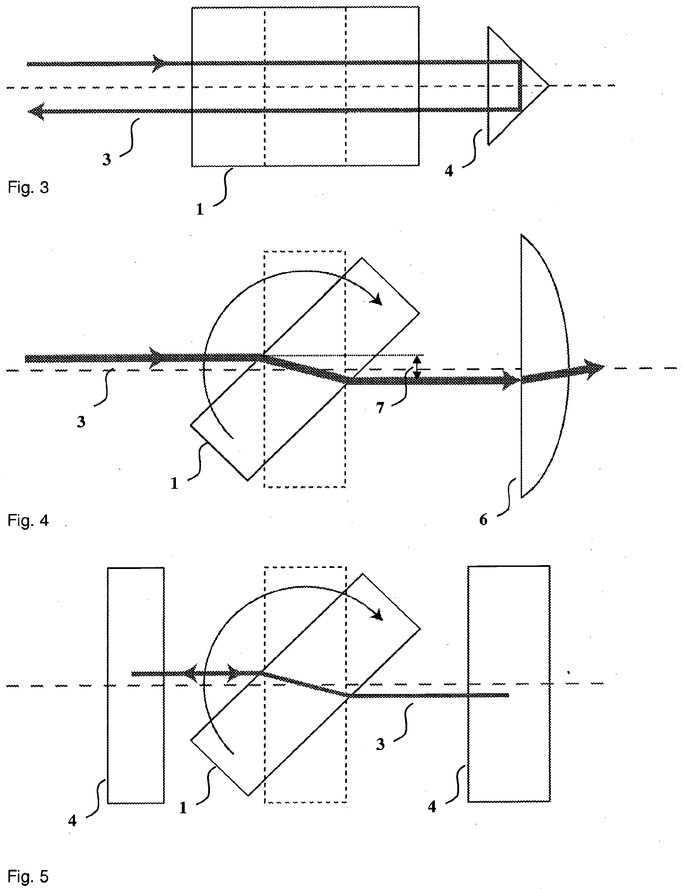

Fig. 2 zeigt eine Seitenansicht eines Verzögerungselementes in Form einer rotierenden transparenten planparallelen Platte 1 durch welches elektromagnetische Strahlung im THz- und / oder optischen Frequenzbereich dringt und entsprechend der Winkelposition verzögert wird. Dieser Strahl trifft auf ein reflektierendes Element mit Änderung der Ebene des reflektierten Strahlengangs (beispielsweise in Form eines Umlenkprisma oder eines Eckspiegels) 4 und wird in der Ebene versetzt zurückgeworfen, wie in der Draufsicht (Fig. 3) dargestellt ist.
   Ein weiteres Ausführungsbeispiel ist in Fig. 4 dargestellt. Es zeigt die Seitenansicht des Verzögerungselementes in Form einer rotierenden transparenten planparallelen Platte 1, durch welche elektromagnetische Strahlung im THz- und / oder optischen Frequenzbereich 3 dringt und entsprechend der Winkelposition verzögert wird. Aufgrund der Drehung der Platte wird auch die Strahllage parallel verschoben und es kommt zu einem Versatz des Strahlengangs 7. Anstatt wieder durch den Drehkörper geleitet zu werden, wird dieser Strahl z.B. über ein optisches Element 6, bevorzugt in Form einer Linse, auf den THz-Detektor oder den THz-Emitter gerichtet . Eine Linse bildet achsennahe Strahlen auf den gleichen Fokuspunkt ab, so dass dieses einfachere Verfahren ohne Rückweg durch das Verzögerungselement in Form einer rotierenden transparenten planparallelen Platte 1 oder in Form eines rotierenden transparenten planparallelen Würfels 2 ebenfalls möglich ist.
Fig. 5 zeigt ein Ausführungsbeispiel mit Ausgleich des Versatzes des Strahlengangs 7. Die Strahlung trifft ein reflektierendes Element mit Änderung der Ebene des reflektierten Strahlengangs 4 in Form eines Eckspiegels (links) und wird durch das Verzögerungselement in Form einer rotierenden transparenten planparallelen Platte 1 geleitet. Danach wirft diese ein reflektierendes Element mit Änderung der Ebene des reflektierten Strahlengangs 4 in Form eines Prismas oder eines zweiten Eckspiegels (rechts) zurück auf die zweite Seite des ersten reflektierenden Elementes mit Änderung der Ebene des reflektierten Strahlengangs 4 in Form eines Eckspiegels (links). Die resultierende, variabel verzögerte elektromagnetische Strahlung im THz- und / oder optischen Frequenzbereiches 3 ist kollinear zum Eingangsstrahl.

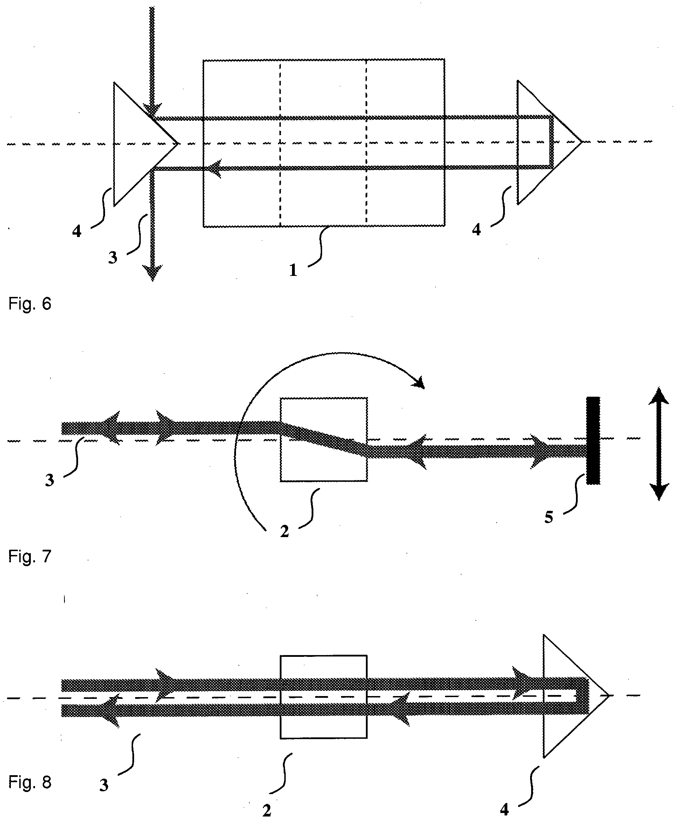

Fig. 6: Draufsicht zu Fig. 5.
Fig. 7 zeigt ein Ausführungsbeispiel für ein Verzögerungselement in Form eines rotierenden transparenten planparallelen Würfels 2. Rückreflektor ist ein reflektierendes Element ohne Änderung der Ebene des reflektierten Strahlengangs in Form eines Planspiegels, so dass der verzögerte Strahl der elektromagnetischen Strahlung im THz- und / oder optischen Frequenzbereiches 3 in den Eingangsstrahl der elektromagnetische Strahlung im THz- und / oder optischen Frequenzbereiches 3 zurückgeworfen wird.
Fig. 8 zeigt ein Ausführungsbeispiel für ein Verzögerungselement in Form eines rotierenden transparenten planparallelen Würfels 2 mit dem Einsatz eines reflektierenden Elements mit Änderung der Ebene des reflektierten Strahlengangs 4 in Form eines Prismas oder Eckspiegels um die Ebene des rückgeworfenen Strahls der elektromagnetische Strahlung im THz- und / oder optischen Frequenzbereiches 3 zu ändern.

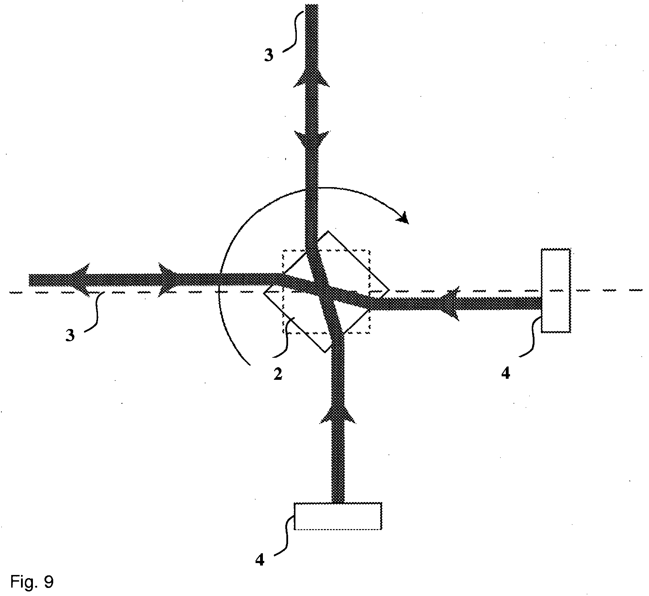

Fig. 9: Ausführungsbeispiel für einen Würfel: Aufbau bei dem der Strahl der elektromagnetischen Strahlung im THz- und / oder optischen Frequenzbereiches 3 zunächst in zwei Teile aufgespalten wird und dann durch das Verzögerungselement in Form eines rotierenden transparenten planparallelen Würfels 2 geleitet wird. Hiermit kann ein größerer homogenerer Zeitbereich erreicht werden. Als reflektierende Elemente werden in diesem Ausführungsbeispiel reflektierende Elemente mit Änderung der Ebene des reflektierten Strahlengangs (beispielsweise in Form eines Umlenkprismas oder eines Eckspiegels) 4 eingesetzt.

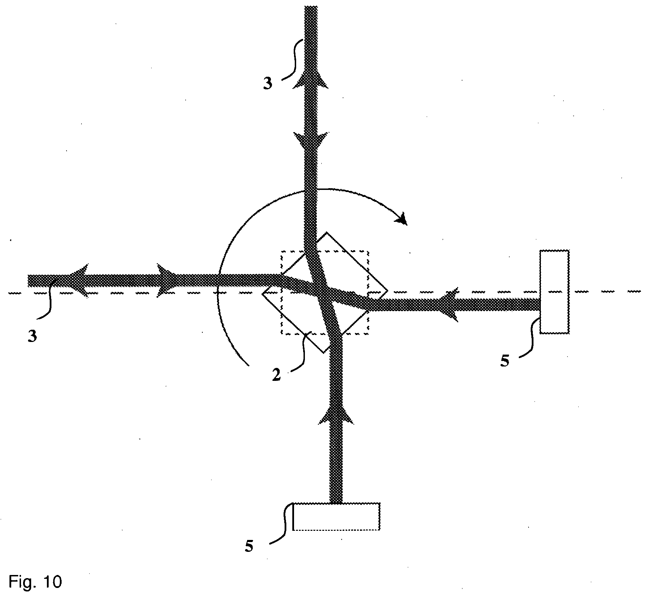

Fig. 10: Ausführungsbeispiel für einen Würfel: Aufbau bei dem der Strahl der elektromagnetischen Strahlung im THz- und / oder optischen Frequenzbereiches 3 zunächst in zwei Teile aufgespalten wird und dann durch das Verzögerungselement in Form eines rotierenden transparenten planparallelen Würfels 2 geleitet wird. Hiermit kann ein größerer homogenerer Zeitbereich erreicht werden. Als reflektierende Elemente werden in diesem Ausführungsbeispiel reflektierende Elemente ohne Änderung der Ebene des reflektierten Strahlengangs (beispielsweise in Form eines Planspiegels) 5 eingesetzt.

In allen Ausführungsbeispielen, wenn nur das Verzögerungselement in Form einer rotierenden transparenten planparallelen Platte 1 dargestellt ist, kann das gleiche Ausführungsbeispiel ebenfalls mit dem Verzögerungselement in Form eines rotierenden transparenten planparallelen Würfels 2 ausgeführt werden und umgekehrt.

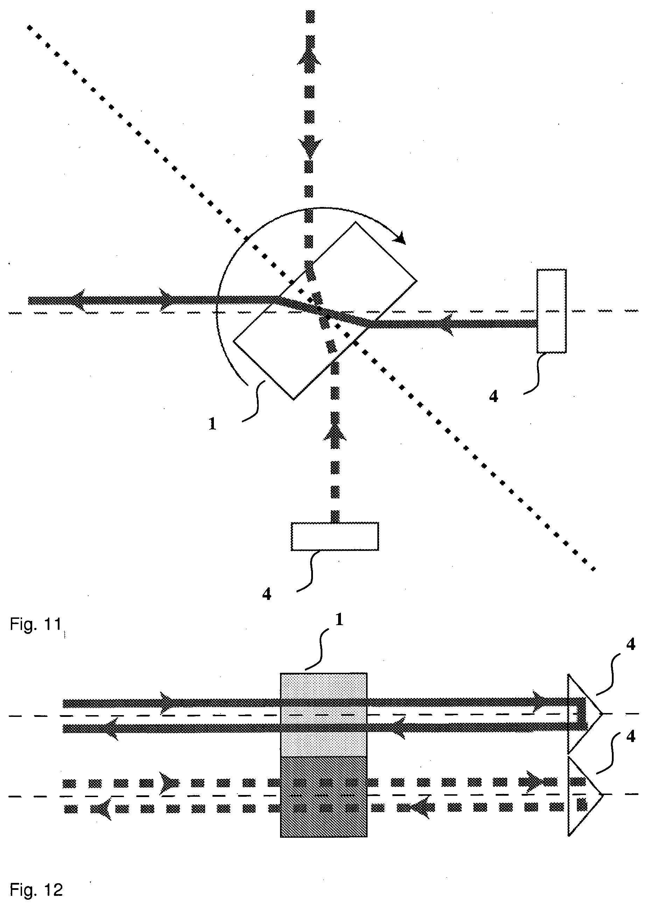

Fig. 11: Ausführungsbeispiel bei dem das Verzögerungselement in Form einer rotierenden transparenten planparallelen Platte 1 oder eines rotierenden transparenten planparallelen Würfels 2 aus zwei verschiedenen Materialien besteht so dass beispielsweise der obere Teil aus einem optisch transparentem Material, bevorzugt Glas, besteht und der untere aus einem THz transparenten Material, bevorzugt Kunststoff, besteht. So erfolgt eine Verzögerung der elektromagnetischen Strahlung im THz-Frequenzbereich als auch der elektromagnetischen Strahlung im optischen Frequenzbereich um den effektiven Zeithub zu verdoppeln und / oder eine mit dem Drehwinkel beinahe linear korrelierende Zeitachse zu erreichen.

In einem andern Ausführungsbeispiel besteht das Verzögerungselement in Form einer rotierenden transparenten planparallelen Platte 1 oder eines rotierenden transparenten planparallelen Würfels 2 aus einem homogenen Material.

In einem Ausführungsbeispiel (nicht dargestellt) ist mindestens ein Verzögerungselement in Form einer rotierenden transparenten planparallelen Platte 1 oder eines rotierenden transparenten planparallelen Würfels 2 in einem THz-System, insbesondere in einem THz-Spektrometer, im Strahlengang der elektromagnetischen Strahlung im THz-Frequenzbereich platziert.

Alternativ ist mindestens ein Verzögerungselement in Form einer rotierenden transparenten planparallelen Platte 1 oder eines rotierenden transparenten planparallelen Würfels 2 in einem THz-System, insbesondere in einem THz-Spektrometer, im Strahlengang der elektromagnetischen Strahlung im optischen Frequenzbereich platziert.

Alternativ sind mindestens zwei Verzögerungselemente in Form einer rotierenden transparenten planparallelen Platte 1 oder eines rotierenden transparenten planparallelen Würfels 2 in einem THz-System, insbesondere in einem THz-Spektrometer, wobei mindestens ein Verzögerungselement im Strahlengang der elektromagnetischen Strahlung im THz-Frequenzbereich und mindestens ein Verzögerungselement im Strahlengang der elektromagnetischen Strahlung im optischen Frequenzbereich platziert ist. Dies führt zu einem zeitversetzten Einsatz und hat den Vorteil, dass zum einen ein höherer Zeithub erreicht wird und es zum andern zu einer höheren Flexibilität führt. So kann beispielsweise ein Element zur Datenaufnahme beispielsweise um den Zeitbereich von 50 ps schnell drehen, während das andere stufenweise (z.B. in 50 ps Schritten) bewegt wird, um einen geeigneten Zeitbereich einzustellen.

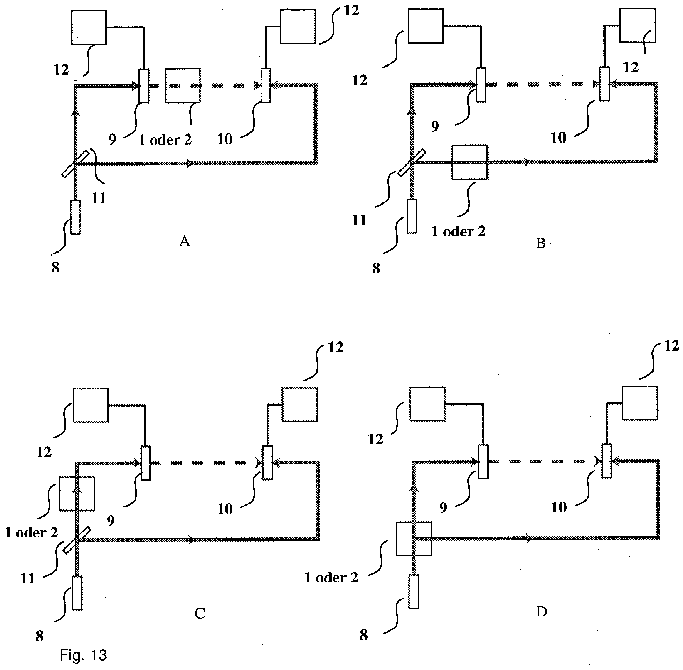

Fig. 13: zeigt verschiedene THz-Systeme, wobei das Verzögerungselement in Form einer rotierenden transparenten planparallelen Platte 1 und / oder in Form eines rotierenden transparenten planparallelen Würfels 2 (nicht dargestellt) jeweils unterschiedlich positioniert ist. Die Laserquelle 8 ist alternativ als cw-(Dauerstrich-), mulitmode- oder fs-Laser ausgeführt. Als fs-Laser (Femtosekundenlaser) werden Laser bezeichnet, die mit einer gewissen Repetitionsrate Laserpulse im fs-Bereich emittieren. Die Pulse verfügen über ein Spektrum mit mehreren nm Breite und aufgrund der kurzen Pulsdauern über hohe Spitzenleistungen bei relativ geringer Durchschnittsleistung. Diese Laser sind in verschiedenen Wellenlängenbereichen erhältlich, z.B. bei 800 nm, 1060 nm oder bei 1550 nm. Als cw-Laser werden Laser bezeichnet, die bei einer festen Wellenlänge Laserlicht emittieren. Hierbei können verschiedene Verfahren zum Einsatz kommen um die Wellenlänge zu stabilisieren oder durchzustimmen. Bei der THz-Photomischung kommen mindestens zwei dieser cw-Laser zum Einsatz. Unter dem Begriff Multimode-Laser sind die Laser bezeichnet, die nicht bei einer festen Wellenlänge emittieren, sondern mehrere Laserlinien (Moden) gleichzeitig emittieren. Besonders bevorzugt ist dabei der Fall von äquidistanten Laserlinien, bei dem ein pulsförmiges THz-Signal resultiert ähnlich zu der THz-Zeitbereichsspektroskopie. Dieser Fall wird auch als Quasi-Zeitbereichsspektroskopie bezeichnet. Der THz-Emitter 9 und der THz-Detektor 10 mit angeschlossener Elektronik sind schematisch angedeutet, dazwischen befindet sich der THz-Bereich (gestrichelt dargestellt). Der Laserstrahl trifft auf den Strahlteiler 11 und wird in Sender- und Empfängerarm aufgeteilt, um anschließend die Antennen (THz-Detektor 10 und / oder THz-Emitter 9) zu schalten. Mit der Elektronik 12 und dem Verzögerungselement in Form einer rotierenden transparenten planparallelen Platte 1 und / oder in Form eines rotierenden transparenten planparallelen Würfels 2 wird das THz-Signal detektiert. Das Verzögerungselement in Form einer rotierenden transparenten planparallelen Platte 1 und / oder in Form eines rotierenden transparenten planparallelen Würfels 2 kann im THz-Bereich liegen Fig. 13A, im Sendearm Fig. 13C- und / oder Empfängerarm Fig. 13B. Bei der Kombination Sende- und Empfängerarm oder THz-Bereich und Empfängerarm wird eine homogenisierte Zeitachse erreicht Fig. 13D. Als Sendearm wird der Bereich von Strahlteiler 11 bis einschließlich THz-Emitter 9 sowie der THz-Pfad bis zum THz-Detektpr bezeichnet. Als Empfängerarm wird entsprechend der Bereich von Strahlteiler 11 bis einschließlich THz-Detektor 10 bezeichnet.

Die Elektronik 12 im Sender- und im Empfängerarm sind vorzugsweise unterschiedlich ausgeführt.

### Bezugszeichenliste

1 Verzögerungselement in Form einer rotierenden transparenten planparallelen Platte
2 Verzögerungselement in Form eines rotierenden transparenten planparallelen Würfels
3 elektromagnetischen Strahlung im THz- und / oder optischen Frequenzbereich (der Pfeil gibt die Richtung der Strahlung an)
4 reflektierendes Element mit Änderung der Ebene des reflektierten Strahlengangs (beispielsweise in Form eines Umlenkprismas oder eines Eckspiegels)
5 reflektierendes Element ohne Änderung der Ebene des reflektierten Strahlengangs (beispielsweise in Form eines Planspiegels)
6 optisches Element (beispielsweise in Form einer Linse)
7 Versatz des Strahlengangs
8 Laserquelle (beispielsweise in Form eines cw-, multimode oder fs-Lasers)
9 THz-Emitter
10 THz-Detektor
11 Strahlteiler
12 Elektronik (unterschiedlich ausgeführt)

Fig. 1a: Ausführungsbeispiel des Verzögerungselementes in Form einer rotierenden transparenten planparallelen Platte 1. Die Seiten/Ecken weisen eine geeignete Form auf um den Luftwiderstand zu reduzieren. Bei einem Verzögerungselement in Form einer rotierenden transparenten planparallelen Platte 1 treten pro Umdrehung vier Verzögerungsbereiche auf: 0-90°, 90°-180°, 180°-270°, 270°-360°.
Fig. 1b: Ausführungsbeispiel des Verzögerungselementes in Form eines rotierenden transparenten planparallelen Würfels 2 um durch die Nutzung mehrerer Facetten eine Verdopplung des Verzögerungszyklus zu erreichen. Bei einem Verzögerungselement in Form eines rotierenden transparenten planparallelen Würfels 2 wird die Anzahl der Verzögerungsbereiche verdoppelt gegenüber dem Verzögerungselement in Form einer rotierenden transparenten planparallelen Platte 1 in Fig. 1a: 0-45°,45°-90°,usw.
Fig. 2: Seitenansicht des Verzögerungselementes in Form einer rotierenden transparenten planparallelen Platte 1, durch welche elektromagnetische Strahlung im THz- und / oder optischen Frequenzbereich dringt und entsprechend der Winkelposition verzögert wird. Dieser Strahl trifft auf ein reflektierendes Element mit Änderung der Ebene des reflektierten Strahlengangs in Form eines Umlenkprismas (4) und wird in der Ebene versetzt zurückgeworfen, wie in der Draufsicht (Fig. 3) gezeichnet ist.
Fig. 3: Draufsicht zu Fig. 2
Fig. 4: Seitenansicht des Verzögerungselementes in Form einer rotierenden transparenten planparallelen Platte 1 durch welche eine elektromagnetische Strahlung im THz- und / oder optischen Frequenzbereich 3 dringt und entsprechend der Winkelposition verzögert wird. Aufgrund der Drehung wird auch die Strahllage parallel verschoben und es kommt zu einem Versatz des Strahlengangs 7. Anstatt wieder durch das Verzögerungselement in Form einer rotierenden transparenten planparallelen Platte 1 geleitet zu werden, wird eine elektromagnetische Strahlung im THz- und / oder optischen Frequenzbereich 3 genutzt um z.B. über eine optisches Element in Form einer Linse auf den THz-Detektor gerichtet zu werden oder in eine Glasfaser gekoppelt zu werden. Eine Linse bildet achsennahe Strahlen auf den gleichen Fokuspunkt ab, so dass dieses einfachere Verfahren ohne Rückweg durch das Verzögerungselement in Form einer rotierenden transparenten planparallelen Platte 1 oder in Form eines rotierenden transparenten planparallelen Würfels 2 ebenfalls möglich ist.
Fig. 5: Verzögerungsaufbau mit Ausgleich des Versatzes des Strahlengangs 7. Die Strahlung trifft ein reflektierendes Element mit Änderung der Ebene des reflektierten Strahlengangs 4 in Form eines Eckspiegels (links) und wird durch das Verzögerungselement in Form einer rotierenden transparenten planparallelen Platte 1 geleitet. Danach wirft diese ein reflektierendes Element mit Änderung der Ebene des reflektierten Strahlengangs 4 in Form eines Prismas oder eines zweiten Eckspiegels (rechts) zurück auf die zweite Seite des ersten reflektierenden Elementes mit Änderung der Ebene des reflektierten Strahlengangs 4 in Form eines Eckspiegels (links). Die resultierende, variabel verzögerte elektromagnetische Strahlung im THz- und / oder optischen Frequenzbereiches 3 ist kollinear zum Eingangsstrahl.
Fig. 6: Draufsicht zu Fig. 5.
Fig. 7 zeigt ein Ausführungsbeispiel für ein Verzögerungselement in Form eines rotierenden transparenten planparallelen Würfels 2. Rückreflektor ist ein reflektierendes Element ohne Änderung der Ebene des reflektierten Strahlengangs in Form eines Planspiegels, so dass der verzögerte Strahl der elektromagnetischen Strahlung im THz- und / oder optischen Frequenzbereiches 3 in den Eingangsstrahl der elektromagnetischen Strahlung im THz- und / oder optischen Frequenzbereiches 3 zurückgeworfen wird.
Fig. 8 zeigt ein Ausführungsbeispiel für ein Verzögerungselement in Form eines rotierenden transparenten planparallelen Würfels 2 mit dem Einsatz eines reflektierenden Elements mit Änderung der Ebene des reflektierten Strahlengangs 4 in Form eines Prismas oder Eckspiegels um die Ebene des rückgeworfenen Strahls der elektromagnetische Strahlung im THz- und / oder optischen Frequenzbereiches 3 zu ändern.
Fig. 9: Ausführungsbeispiel für einen Würfel: Aufbau bei dem der Strahl der elektromagnetischen Strahlung im THz- und / oder optischen Frequenzbereich 3 zunächst in zwei Teile aufgespalten wird und dann durch das Verzögerungselement in Form eines rotierenden transparenten planparallelen Würfels 2 geleitet wird. Als reflektierende Elemente werden in diesem Ausführungsbeispiel reflektierende Elemente mit Änderung der Ebene des reflektierten Strahlengangs (beispielsweise in Form eines Umlenkprismas oder eines Eckspiegels) 4 eingesetzt.
Fig. 10: Ausführungsbeispiel für einen Würfel: Aufbau bei dem der Strahl der elektromagnetischen Strahlung im THz- und / oder optischen Frequenzbereiches 3 zunächst in zwei Teile aufgespalten wird und dann durch das Verzögerungselement in Form eines rotierenden transparenten planparallelen Würfels 2 geleitet wird. Als reflektierende Elemente werden in diesem Ausführungsbeispiel reflektierende Elemente ohne Änderung der Ebene des reflektierten Strahlengangs (beispielsweise in Form eines Planspiegels) 5 eingesetzt.
Fig. 11: Ausführungsbeispiel für ein Verzögerungselement in Form einer rotierenden transparenten planparallelen Platte 1 aus zwei verschiedenen Materialien ist, dass beispielsweise der obere Teil aus einem optisch transparentem Material, bevorzugt Glas, besteht und der untere aus einem THz transparenten Material, bevorzugt Kunststoff, besteht. So erfolgt eine Verzögerung der elektromagnetischen Strahlung im THz-Frequenzbereich als auch der elektromagnetischen Strahlung im optischen Frequenzbereich um den effektiven Zeithub zu verdoppeln. (Daraufsicht).
Fig. 12: Seitenansicht Fig. 11.

Alternativ -nicht dargestellt- ist das Verzögerungselement im Aufbau nach Fig. 11 als Verzögerungselement in Form eines rotierenden transparenten planparallelen Würfels 2 ausgelegt.

Fig. 13: zeigt verschiedene THz-Systeme, wobei das Verzögerungselement in Form einer rotierenden transparenten planparallelen Platte 1 und / oder in Form eines rotierenden transparenten planparallelen Würfels 2 (nicht dargestellt) jeweils unterschiedlich positioniert ist. Die Laserquelle 8 ist austauschbar, also cw-, mulitmode- oder fs-Laser. Der THz-Emitter 9 und der THz-Detektor 10 mit angeschlossener Elektronik sind schematisch angedeutet, dazwischen befindet sich der THz-Bereich (gestrichelt dargestellt). Der Laserstrahl trifft auf den Strahlteiler 11 und wird in Sender- und Empfängerarm aufgeteilt, um anschließend die Antennen (THz-Detektor 10 und / oder THz Emitter 9) zu schalten. Mit der Elektronik 12 und dem Verzögerungselement in Form einer rotierenden transparenten planparallelen Platte 1 und / oder in Form eines rotierenden transparenten planparallelen Würfels 2 wird das THz-Signal detektiert. Das Verzögerungselement in Form einer rotierenden transparenten planparallelen Platte 1 und / oder in Form eines rotierenden transparenten planparallelen Würfels 2 kann im THz-Bereich liegen Fig. 13A, im Sendearm Fig. 13C- und / oder Empfängerarm Fig. 13B. Bei der Kombination Sende- und Empfängerarm oder THz-Bereich und Empfängerarm wird eine homogenisierte Zeitachse erreicht Fig. 13D. Als Sendearm wird der Bereich von Strahlteiler 11 bis einschließlich THz-Emitter 9 sowie der der THz-Pfad bis zum THz-Detektor bezeichnet. Als Empfängerarm wird entsprechend der Bereich von Strahlteiler 11 bis einschließlich THz-Detektor 10 bezeichnet.

## Patentansprüche

1. THz-System basierend auf dem Einsatz von elektromagnetischer Strahlung, wobei Laserlicht über einen Frequenzmischprozess in elektromagnetische Strahlung im THz-Frequenzbereich gewandelt wird, mit einer Vorrichtung geeignet zur Laufzeitänderung elektromagnetischer Strahlung im THz-Frequenzbereich (3) aufweisend einen THz-Emitter und einen THz-Detektor oder einen THz-Transceiver (anstelle des THz-Detektors und des THz-Emitters) und ein Verzögerungselement, wobei das Verzögerungselement in Form eines rotierenden Körpers ausgeführt ist, welcher mindestens zwei, sich zumindest teilweise gegenüberliegende, planparallele Seiten aufweist, wobei das Material des Körpers im Bereich zwischen den mindestens zwei Seiten transparent für elektromagnetische Strahlung ausgelegt ist, **dadurch gekennzeichnet, dass** das Verzögerungselement einen größeren Brechungsindex aufweist als die Umgebung, wobei das Verzögerungselement in Form einer transparenten planparallelen Platte (1) oder eines transparenten planparallelen Würfels (2) derart ausgebildet ist, dass die elektromagnetische Strahlung im THz- Frequenzbereich beim Eintritt und beim Austritt entsprechend des Auftreffwinkels gebrochen wird und in Abhängigkeit vom Auftreffwinkel auf unterschiedlichen Pfaden ohne Reflexion durch das Verzögerungselement läuft, wobei eine Strahllage parallel verschoben wird.

2. THz-System nach Anspruch 1, **dadurch gekennzeichnet, dass** das Verzögerungselement (1, 2) mit einer Anti-Reflexions-Beschichtung versehen ist.

3. THz-System nach einem der Ansprüche 1 bis 2, **dadurch gekennzeichnet, dass** das Verzögerungselement (1, 2) aus einem homogenen Material mit konstantem Brechungsindex ausgeführt ist und/oder das Verzögerungselement (1, 2) als Mischstoff ausgeführt ist.

4. THz-System nach einem der Ansprüche 2 bis 3, **dadurch gekennzeichnet, dass** die Anti-Reflexions-Beschichtung für den Einsatz im Strahlengang der elektromagnetischen Strahlung im THz-Frequenzbereich als Mikrostrukturierungen der Oberfläche ausgeführt ist.

5. THz-System nach einem der Ansprüche 1 bis 4, **dadurch gekennzeichnet, dass** ein reflektierendes Element mit Änderung der Ebene des reflektierten Strahlengangs (4) und/oder ein optisches Element (6) zur Aufhebung des Versatzes des Strahlengangs (7) nach dem Verzögerungselement in Form einer rotierenden transparenten planparallelen Platte (1) oder eines rotierenden transparenten planparallelen Würfels (2) angeordnet ist.

6. THz-System nach einem der Ansprüche 1 bis 5, **dadurch gekennzeichnet, dass** die Ecken und Kanten des Verzögerungselementes (1, 2) abgerundet sind, so dass der Luftwiderstand möglichst gering ist.

7. THz-System nach einem der Ansprüche 1 bis 2 und/oder 4 bis 6, **dadurch gekennzeichnet, dass** das Verzögerungselement (1, 2) aus zwei Materialien besteht, wobei das eine Material durchlässig ist für elektromagnetische Strahlung im optischen Frequenzbereich und das andere für elektromagnetische Strahlung im THz-Frequenzbereich.

8. THz-System nach einem der Ansprüche 1 bis 7, **dadurch gekennzeichnet, dass** das Verzögerungselement (1, 2) entweder im Strahlengang der elektromagnetischen Strahlung im THz-Frequenzbereich oder im Strahlengang der elektromagnetischen Strahlung im optischen Frequenzbereich platziert ist oder eine Kombination aus mehreren Elementen in einem oder beiden Strahlengängen platziert ist.

9. Ein Verfahren zur Laufzeitänderung elektromagnetischer Strahlung im THz- und/oder optischen Frequenzbereich (3) in einem THz-System gemäß einem der Ansprüche 1 bis 8, **dadurch gekennzeichnet, dass** die elektromagnetische Strahlung im THz-Frequenzbereich (3):
a) auf ein rotierendes Verzögerungselement in Form einer transparenten planparallelen Platte (1) oder eines transparenten planparallelen Würfels (2) trifft, das ein Material mit einem Brechungsindex aufweist, der größer als der Brechungsindex der Umgebung ist,
b) durch eine Anti-Reflexions-Beschichtung in das Verzögerungselement in Form einer rotierenden transparenten planparallelen Platte (1) oder eines rotierenden transparenten planparallelen Würfels (2) dringt,
c) beim Eintritt entsprechend des Auftreffwinkels gebrochen wird,
d) beim Austritt entsprechend des Auftreffwinkels gebrochen wird,
e) in Abhängigkeit vom Auftreffwinkel auf unterschiedlichen Pfaden ohne Reflexion durch das Verzögerungselement läuft,
wobei eine Strahllage parallel verschoben wird.

10. Ein Verfahren zur Laufzeitänderung elektromagnetischer Strahlung im THz-und/oder optischen Frequenzbereich (3) in THz-Systemen nach einem der Ansprüche 1 bis 9, **dadurch gekennzeichnet, dass** nach Schritt e) der Versatz des Strahlengangs (7) durch ein reflektierendes Element mit Änderung der Ebene der reflektierten Strahlung (4) aufgehoben wird oder durch ein optisches Element (6) aufgehoben wird.

11. Ein THz-Spektrometer, **dadurch gekennzeichnet, dass** es ein THz-System nach einem der Ansprüche 1 bis 8 aufweist.

12. Ein THz-Spektrometer nach Anspruch 11, **dadurch gekennzeichnet, dass** die Zeitmessung mittels Encoder erfolgt.

13. Ein Zeitbereichsspektrometer oder ein Dauerstrich-THz-Spektrometer oder ein Quasi-Zeitbereichsspektrometer, **dadurch gekennzeichnet, dass** es ein THz-System nach einem der Ansprüche 1 bis 8 und/oder einen Encoder nach Anspruch 12 aufweist.

## Claims

1. THz system based on the use of electromagnetic radiation, wherein laser light is converted by means of a frequency mixing process into electromagnetic radiation in the THz frequency range using a device suitable to change the propagation time of electromagnetic radiation in the THz frequency range (3) comprising a THz emitter and a THz detector or a THz transceiver (instead of the THz emitter and the THz detector) and a delay element, wherein the delay element is realised in the form of a rotating body comprising at least two at least partly opposing, plane-parallel sides, wherein the material of the body is realised in the area between the at least two sides in a way which is transparent for electromagnetic radiation, **characterised in that** the delay element comprises a greater refractive index than the environment, wherein the delay element is realised in the form of a transparent plane-parallel plate (1) or a transparent plane-parallel cube (2) designed so that the electromagnetic radiation in the THz frequency range is refracted in accordance with its incident angle when entering and exiting and, depending on the incident angle, runs along different paths without reflection through the delay element, wherein a beam position is displaced in parallel to this.

2. THz system according to claim 1, **characterised in that** the delay element (1, 2) is provided with an anti-reflective coating.

3. THz system according to one of the claims 1 to 2, **characterised in that** the delay element (1, 2) is designed from a homogenous material with a constant refractive index and/or the delay element (1, 2) is realised as a mixed material.

4. THz system according to one of the claims 2 to 3, **characterised in that** the anti-reflective coating to be used in the beam path of the electromagnetic radiation in the THz frequency range is realised as micro-structuring of the surface.

5. THz system according to one of the claims 1 to 4, **characterised in that** a reflecting element with a modification of the level of the reflected beam path (4) and/or an optical element (6) to neutralise the displacement of the beam path (7) is arranged behind the delay element in the form of a rotating transparent plane-parallel plate (1) or a rotating transparent plane-parallel cube (2).

6. THz system according to one of the claims 1 to 5, **characterised in that** the corners and edges of the delay element (1, 2) are rounded so that the air resistance is as low as possible.

7. THz system according to one of the claims 1 to 2 and/or 4 to 6, **characterised in that** the delay element (1, 2) consists of two materials, wherein one material is permeable for electromagnetic radiation in the optical frequency range and the other for electromagnetic radiation in the THz frequency range.

8. THz system according to one of the claims 1 to 7, **characterised in that** the delay element (1, 2) is placed in the beam path of the electromagnetic radiation in the THz frequency range or in the beam path of the electromagnetic radiation in the optical frequency range or a combination of several elements is placed in one or both beam paths.

9. A method for changing the propagation time of electromagnetic radiation in the THz and/or optical frequency range (3) in a THz system according to one of the claims 1 to 8, **characterised in that** the electromagnetic radiation in the THz frequency range (3):
a) strikes a rotating delay element in the form of a transparent plane-parallel plate (1) or a plane-parallel cube (2) comprising a material with a refractive index which is greater than the refractive index of the environment,
b) passes through an anti-reflective coating into the delay element in the form of a rotating transparent plane-parallel plate (1) or a rotating transparent plane-parallel cube (2),
c) is refracted according to the incident angle when entering,
d) is refracted according to the incident angle when exiting,
e) runs on different paths through the delay element without reflection depending on the incident angle,
wherein a beam position is displaced in parallel to this.

10. A method for changing the propagation time of electromagnetic radiation in the THz and/or optical frequency range (3) in THz systems according to one of the claims 1 to 9, **characterised in that** subsequent to step e) the displacement of the beam path (7) is neutralised by means of a reflecting element with modification of the level of the reflecting radiation (4) or by means of an optical element (6).

11. A THz spectrometer, **characterised in that** a THz system according to one of the claims 1 to 8 is comprised.

12. A THz spectrometer according to claim 11, **characterised in that** time is measured with an encoder.

13. A time-domain spectrometer or a continuous-wave THz spectrometer or a quasi-time-domain spectrometer, **characterised in that** a THz system according to one of the claims 1 to 8 and/or an encoder according to claim 12 is comprised.

## Revendications

1. Système THz basé sur l'utilisation d'un rayonnement électromagnétique, dans lequel la lumière laser est converti au cours d'un processus de mélange de fréquences en rayonnement électromagnétique dans la plage de fréquence THz, avec un dispositif approprié pour la variation du temps de propagation du rayonnement électromagnétique dans la plage de fréquence THz (3) comprenant un émetteur THz et un détecteur THz ou un émetteur-récepteur THz (à la place du détecteur THz et de l'émetteur THz) et un élément de retardement, dans lequel l'élément de retardement est réalisé sous forme d'un corps rotatif, qui présente au minimum deux faces, opposés au moins partiellement, planes et parallèles, dans lequel le matériau du corps dans la zone entre les au moins deux faces est conçu d'une manière transparente pour le rayonnement électromagnétique, **caractérisé en ce que** l'élément de retardement présente un indice de réfraction plus grand que l'environnement, où l'élément de retardement sous forme de plaque (1) transparente à faces planes et parallèles ou de cube (2) transparent à faces planes et parallèles est configuré de telle sorte que le rayonnement électromagnétique dans la plage de fréquence THz est réfracté conformément à l'angle d'incidence lors de l'entrée et de la sortie et court en fonction de l'angle d'incidence sur des chemins différents sans réflexion par l'élément de retardement, où une position du faisceau est décalée en parallèle.

2. Système THz selon la revendication 1, **caractérisé en ce que** l'élément de retardement (1, 2) est pourvu d'un revêtement anti-reflet.

3. Système THz selon l'une des revendications 1 à 2, **caractérisé en ce que** l'élément de retardement (1, 2) est réalisé dans un matériau homogène avec un indice de réfraction constant et/ou l'élément de retardement (1, 2) est réalisé comme un matériau composite.

4. Système THz selon l'une des revendications 2 à 3, **caractérisé en ce que** le revêtement anti-reflet pour l'utilisation dans la trajectoire de faisceau du rayonnement électromagnétique dans la plage de fréquence THz est réalisé comme des microstructurations de la surface.

5. Système THz selon l'une des revendications 1 à 4, **caractérisé en ce qu'**un élément réfléchissant avec changement du niveau de la trajectoire de faisceau réfléchi (4) et/ou un élément optique (6) pour la suspension du décalage de la trajectoire de faisceau (7) est disposé après l'élément de retardement en forme de plaque (1) rotative transparente à faces planes et parallèles ou de cube (2) rotatif transparent à faces planes et parallèles.

6. Système THz selon l'une des revendications 1 à 5, **caractérisé en ce que** les coins et les bords de l'élément de retardement (1, 2) sont arrondis, de sorte que la résistance de l'air soit aussi faible que possible.

7. Système THz selon l'une des revendications 1 à 2 et/ou 4 à 6, **caractérisé en ce que** l'élément de retardement (1, 2) est constitué de deux matériaux, dans lequel un matériau est perméable au rayonnement électromagnétique dans la plage de fréquence optique et l'autre au rayonnement électromagnétique dans la plage de fréquences THz.

8. Système THz selon l'une des revendications 1 à 7, **caractérisé en ce que** l'élément de retardement (1, 2) est placé soit dans la trajectoire de faisceau du rayonnement électromagnétique dans la plage de fréquences THz soit dans la trajectoire de faisceau du rayonnement électromagnétique dans la plage de fréquence optique ou une combinaison de plusieurs éléments est placée dans l'une ou les deux trajectoires de faisceau.

9. Un procédé pour la variation du temps de propagation du rayonnement électromagnétique dans la plage de fréquence THz et/ou optique (3) dans un système THz selon l'une des revendications 1 à 8, **caractérisé en ce que** le rayonnement électromagnétique dans la plage de fréquence THz (3) :
a) rencontre un élément de retardement rotatif sous forme de plaque (1) transparente à faces planes et parallèles ou de cube (2) transparent à faces planes et parallèles qui présente un matériau avec un indice de réfraction supérieur à l'indice de réfraction de l'environnement,
b) pénètre à travers un revêtement anti-reflet dans l'élément de retardement sous forme de plaque (1) rotative transparente à faces planes et parallèles ou de cube (2) rotatif transparent à faces planes et parallèles,
c) est réfracté lors de l'entrée correspondant à l'angle d'incidence,
d) est réfracté lors de la sortie correspondant à l'angle d'incidence,
e) court en fonction de l'angle d'incidence sur des chemins différents sans réflexion par l'élément de retardement,
où une position du faisceau est décalée en parallèle.

10. Un procédé pour la variation du temps de propagation du rayonnement électromagnétique dans la plage de fréquence THz et/ou optique (3) dans des systèmes THz selon l'une des revendications 1 à 9, **caractérisé en ce qu'**après l'étape e) le décalage de la trajectoire de faisceau (7) est neutralisé par un élément réfléchissant avec changement du niveau du rayonnement réfléchi (4) ou est neutralisé par le biais d'un élément optique (6).

11. Un spectromètre THz, **caractérisé en ce qu'**il présente un système de THz selon l'une des revendications 1 à 8.

12. Un spectromètre THz selon la revendication 11, **caractérisé en ce que** la mesure du temps s'effectue par le biais d'un encodeur.

13. Un spectromètre dans le domaine temporel ou un spectromètre THz en mode continu ou un spectromètre dans le domaine quasi-temporel, **caractérisé en ce qu'**il présente un système THz selon l'une des revendications 1 à 8 et/ou un encodeur selon la revendication 12.
